# EUROPÄISCHE PATENTSCHRIFT

(11) **EP 0 678 851 B1**
(45) Veröffentlichungstag und Bekanntmachung des Hinweises auf die Patenterteilung: **12.08.1998**
(21) Anmeldenummer: 95810250.1
(22) Anmeldetag: 12.04.1995
(51) Int. Cl.: G10H 1/00, H04N 7/16

(54) **Vorrichtung zum Vertrieb von Musikinformationen in digitaler Form**
Apparatus for the distribution of musical information in digital form
Dispositif pour la distribution de données musicales sous forme numérique

(30) Priorität: 18.04.1994 DE 4413451
(43) Veröffentlichungstag der Anmeldung: 25.10.1995
(73) Patentinhaber: Brugger, Rolf, CH-4310 Rheinfelden (CH)
(72) Erfinder: Brugger, Rolf, CH-4310 Rheinfelden (CH)
(74) Vertreter: Ullrich, Gerhard, Dr.

(56) Entgegenhaltungen:
- EP-A- 0 416 455
- WO-A-94/11858
- US-A- 4 789 863
- US-A- 4 790 010
- US-A- 5 208 665
- US-A- 5 252 775

## Beschreibung

Die Erfindung betrifft eine Vorrichtung zum Vertrieb von Musikinformationen, welche anbieterseitig eine an ein Kommunikationsnetz angeschlossene oder in dieses integrierte Zentralspeichereinrichtung, die eine Datenbank digitalisierter Musikinformationen aufweist, und konsumentenseitig ein Endgerät, welches über das Kommunikationsnetz mit der Zentralspeichereinrichtung verbindbar ist, umfasst, wobei die Zentralspeichereinrichtung mit einem Servermodul und das Endgerät mit einem Abrufmodul ausgerüstet ist und die beiden Module über das Kommunikationsnetz zur Bestellung und Übermittlung von selektiv ausgewählten Musikinformationen zusammenzuarbeiten vermögen. Weiter betrifft die Erfindung ein Verfahren zum Transport bzw. Vertrieb von Musikinformationen in digital kodierter Form.

Unter Musikinformationen werden im vorliegenden Zusammenhang alle Informationen verstanden, die in irgend> einer Form mit Musikstücken verbunden sind. Hierzu gehören insbesondere eigentliche Musikstücke (akustisch wiedergebbare Ton- bzw. Klanginformationen), aber auch - aufgezählt in erläuterndem Sinn und ohne Anspruch auf Vollständigkeit - : Titel, Texte, Libretti; Angaben zu Urhebern wie Komponisten, Texter, Arrangeure, Interpreten, Orchester, Regisseure, Tontechniker; Spieldauerangaben, Aufnahmedaten, Orchesterformation, Besetzung, Instrumente; Notenmaterial wie Partituren, Einzelstimmen, Arrangements, Auszüge; Bild- und Videomaterial, etwa Cover-Abbildungen, Videoclips, Musikfilme.

Derartige Musikinformationen werden auf herkömmliche Art in unterschiedlichster Form angeboten und vertrieben, so etwa Musikstücke auf Schallplatten, Magnetbändern, Compact Disks, die vorwiegend in Musikgeschäften und Warenhäusern erhältlich sind, Notenmaterial als Einzelblätter, Hefte oder Bücher, die in Musikalien- und Buchhandlungen bezogen werden, usw.

Dabei ist es für den Konsumenten nachteilig, dass keine gemeinsame Bezugsquelle zur Verfügung steht, die es erlauben würde, an sich zusammengehörige Teile wie zum Beispiel eine Musikeinspielung, die zugehörige Originalpartitur und das der Einspielung zugrunde liegende Arrangement als Einheit zu beziehen. Weiter sind die Musikinformationen jeweils in der angebotenen Form als Ganzes zu beziehen, auch wenn beispielsweise nur ein einzelnes Stück einer Compact Disk oder eine einzelne Instrumentalstimme einer Komposition von Interesse ist.

Andererseits stellen sich bei den bisherigen Vertriebsformen für die Produzenten und Anbieter grosse Probleme hinsichtlich der Wahrung ihrer Urheberrechte und der damit verbundenen Abgaben, da bekanntlich sowohl Ton- und Bildträger als auch gedruckte Dokumente leicht in unautorisierter Weise überspielt bzw. kopiert werden können.

Die digitale Informations- und Computertechnik könnte hier prinzipiell zu neuen Lösungen führen, denn sie bietet bei ihrem heutigen Stand verschiedene Möglichkeiten zur Übertragung und Verteilung von digitale Daten und somit an sich auch von Musikinformationen in digitaler Form an. Geeignete Techniken, welche auf dieser Basis die vorgenannten Probleme zu lösen vermögen, sind jedoch bisher nicht bekanntgeworden. Ebensowenig bieten bekannte Broadcastingsysteme Lösungsansätze. Zu nennen wären hier z.B. das geschlossene System zum Betrieb von Karaoke-Stationen gemäss US-A-5 252 775 oder die Kabelfernsehsysteme gemäss EP-A-0 416 455, US-A-5 208 665, US-A-4 790 010 und US-A-4 789 863.

Es ist daher eine Aufgabe der vorliegenden Erfindung, eine Vorrichtung sowie ein Informationenobjekt der eingangs genannten Art zu schaffen, welche die heutigen Möglichkeiten der digitalen Informations- und Computertechnik auszunützen vermögen und dabei einerseits den Vertrieb für den Konsumenten bei verbesserter Dienstleistung vereinfachen und andererseits einen wirksamen Schutz der Urheberrechte sicherstellen.

Diese Aufgabe wird gelöst durch die in den kennzeichnenden Teilen von Patentanspruch 1 sowie Patentanspruch 14 definierte Erfindung; bevorzugte Ausführungsformen ergeben sich aus den abhängigen Patentansprüchen.

Demgemäss wird vorgeschlagen, die Musikinformationen in einem digitalen Musikinformationenobjekt mit einem festgelegten Format zu organisieren. Dabei besitzt das Musikinformationenobjekt einen Kern, der bestimmte Basisinformationen, nämlich wenigstens einen Objekt-Informationscode, Informationen über die Objekt-Struktur, einen Konsumentencode und eine Verschlüsselungstabelle, enthält, sowie an den Kern angegliederte eine oder mehrere Zusatzschichten, welche die eigentlichen Musikinformationen enthalten. Ferner weist die Zentralspeichereinrichtung ein Verschlüsselungsmodul zur Verschlüsselung des Musikinformationenobjekts vor seiner Übermittlung und das Endgerät ein Entschlüsselungsmodul zur Entschlüsselung des Musikinformationenobjekts vor seiner Wiedergabe auf, wobei Ver- und Entschlüsselung auf der im Kern enthaltenen Verschlüsselungstabelle basieren. Zusätzlich ist das Endgerät mit einer Zulassungseinrichtung mit Identifikationsinformationen zur Identifizierung des Endgeräts und/oder des Kosumenten versehen. Die Interpretation und Wiedergabeaufbereitung des Musikinformationenobjekts besorgt ein im Endgerät vorhandenes Interpretationsmodul, wobei durch dieses oder gegebenenfalls auch durch das Entschlüsselungsmodul die Identifikationsinformationen der Zulassungseinrichtung zur Zulassungsprüfung vor der Wiedergabeaufbereitung abfragbar sind.

Die Kombination von Entschlüsselungsmodul im Endgerät, im Musikinformationenobjekt eingebetteter Verschlüsselungstabelle und dem Endgerät zugeordneter Zulassungseinrichtung bildet einen höchst wirksamen Sicherheitsmechanismus zum Schutz gegen unautorisierte Verwendung der im Musikinformationenobjekt enthaltenen Musikinformationen, da zu deren Wiedergabeaufbereitung jeweils alle beteiligten Komponenten, also das entsprechende Modul im Endgerät, das Musikinformationenobjekt und das Endgerät, erstens aufeinander abgestimmt und zweitens vom Anbieter autorisiert sein müssen. Auf diese Weise wird mit hoher Zuverlässigkeit ein unzulässiges Kopieren bzw. Überspielen der Musikinformationen verhindert und somit eine Beachtung der Urheberrechte erzwungen.

Gemäss einer bevorzugten Ausführungsform enthält der Kern des Musikinformationenobjekts zusätzlich ein Zulassungsprüfungsprogrammteil, welches durch das Interpretationsmodul oder das Entschlüsselungsmodul zur Zulassungsprüfung abrufbar ist. Die Anordnung eines derartigen Zulassungsprüfungsprogrammteils im Musikinformationenobjekt selbst bietet eine einfache Möglichkeit, die Arbeitsweise der Zulassungsprüfung von Zeit zu Zeit abzuwandeln und damit den Sicherheitsmechanismus auch längerfristig gegen potentielle Nachahmer verstärkt zu schützen. Hierzu muss vorteilhaft einzig das Zulassungsprüfungsprogrammteil in neu vertriebenen Musikinformationenobjekten geändert werden und die übrigen an der Wiedergabeaufbereitung beteiligten Komponenten können unverändert weiterbenutzt werden.

Um eine schnelle und kostengünstige Datenfernübertragung zu ermöglichen, ist das Musikinformationenobjekt zweckmässig mit einem Datenkomprimierungsverfahren komprimiert. Hierzu kann die Zentralspeichereinrichtung ein Komprimierungsmodul zur Komprimierung vor der Übermittlung und das Endgerät ein Dekomprimierungsmodul zur Dekomprimierung vor der Wiedergabe aufweisen.

Vorzugsweise ist vorgesehen, das Endgerät mit einer Datenaufzeichnungseinrichtung zu versehen, mit der die übermittelten Musikinformationenobjekte lokal auf einem Datenträger gespeichert werden können. Nebst der so ermöglichten späteren Wiederverwendung der Musikinformationenobjekte erlaubt dies, im Endgerät ein Verwaltungsmodul vorzusehen, welches den Konsumenten bei der Suche nach gewünschten Musikinformationen in den lokal vorhandenen Musikinformationenobjekten unterstützt und weitere Funktionen zu deren automatischen Wiedergabe zur Verfügung stellen kann.

In weiterer Ausbildung der Erfindung weist die Zentralspeichereinrichtung ein Verrechnungsmodul auf, das im Zusammenspiel mit dem Servermodul die Kosten der vom Konsumenten bezogenen Musikinformationen ermittelt, diese dem Konsumenten verrechnet und gegebenenfalls auch über die anfallenden Urheberabgaben Buch führt. Ferner kann zweckmässig der Kern des Musikinformationenobjekts Verrechnungsinformationen enthalten, mittels derer sich dem Konsumenten die Bezugs- sowie gegebenenfalls die Übertragungskosten anzeigen lassen.

Das Musikinformationenobjekt kann nach einer bevorzugten Ausführungsform im Sinne eines weitgehend oder vollständig selbstbeschreibenden Informationsobjekts in der jeweiligen Zusatzschicht nebst den Musikinformationen zugehörige Datenbeschreibungsinformationen und/oder spezifische Programmteile, insbesondere zur Wiedergabe der Musikinformationen, enthalten. Zweckmässig sind für die Zusatzschichten unterschiedliche Schichtklassen vorgesehen, die sich vorzugsweise wie folgt unterteilen: Audioschichtklasse, geeignet für Audioinformationen; Notenschichtklasse, geeignet für graphisch aufzubereitende Informationen, insbesondere Notenmaterial; Textschichtklasse, geeignet für Textinformationen, beispielsweise Titel- oder Interpretenangaben, Einspieldaten usw.; Videoschichtklasse, geeignet für Videoinformationen, insbesondere Bildmaterial, Videoclips, Filme. Die in eine beliebige Anzahl Zusatzschichten aufgeteilte Struktur des Musikinformationenobjekts erlaubt es überdies in vorteilhafter Ausbildung, die in der jeweiligen Zusatzschicht enthaltenen Musikinformationen in einem der jeweiligen Schichtklasse angepassten Format zu kodieren.

Zusammengefasst schafft die Erfindung eine speziell geeignete Technik zur Übermittlung und Verteilung von Musikinformationen in digitaler Form. Diese stellt einerseits die notwendigen Mechanismen zum Schutz der Urheberrechte bereit und definiert andererseits ein Musikinformationenobjekt, dessen Aufbau eine standardisierbare Struktur zulässt, die dennoch flexibel erweiterbar und auf die vielfältigen Formen von Musikinformation und deren Wiedergabe anpassbar ist.

Nebst den schon genannten Vorzügen zeichnet sich der Erfindung ferner dadurch aus, dass:
- die aufwendige und kostenintensive Herstellung von Ton- und Bildträgern sowie deren Verpackung, Lagerung und Transport entfällt;
- die Erzeugung schwierig zu entsorgender Trägermaterialien umgangen wird;
- Noten und Texte nicht auf Vorrat gedruckt werden müssen;
- ab Datenbank die sofortige Verfügbarkeit der gewünschten Musikinformationen sichergestellt ist;
- Musikinformationen nach Bedarf des Konsumenten zusammengestellt und übermittelt werden können; und
- Lizenzrechte sich effektiv nach Benutzung abrechnen lassen.

Zur näheren Erläuterung der Erfindung wird im folgenden unter Bezugnahme auf die beiliegenden Zeichnungen ein Ausführungsbeispiel beschrieben. In den Zeichnungen zeigt
Fig. 1 ein schematisches Blockdiagramm einer erfindungsgemässen Vorrichtung zum Vertrieb von Musikinformationen,
Fig. 2 eine bildhafte Darstellung eines Musikinformationenobjekts mit einem Kern und angegliederten Zusatzschichten und
Fig. 3 das Musikinformationenobjekt in schematischer Darstellung mit näher aufgegliedertem Kern.

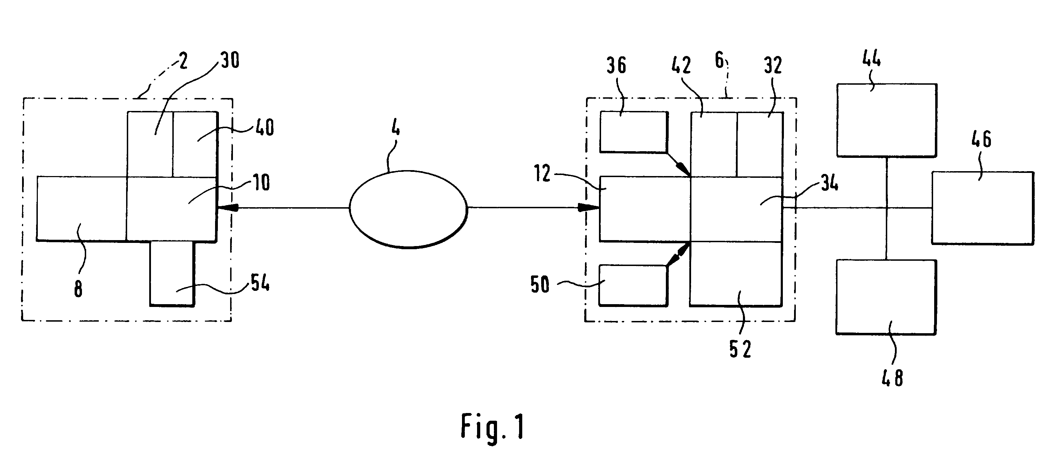

Bei der in Figur 1 schematisch veranschaulichten Vorrichtung zum Vertrieb von Musikinformationen bezeichnet 2 eine Zentralspeichereinrichtung, die an ein Kommunikationsnetz 4 angeschlossen ist. Die Zentralspeichereinrichtung 2 wird in der Regel eine grössere Rechenanlage, ein Hostrechner, sein, der von einem Anbieter, zum Beispiel einem Musik-Verlag, betrieben wird. Als Kommunikationsnetz 4 ist zweckmässig ein diensteintegrierendes Digitalnetz (ISDN), ein paketvermittelndes Netz oder ein ATM-Netz vorgesehen, welche entsprechend der vergleichsweise grossen zu übermittelnden Datenmenge die erforderlichen Leistungsdaten aufweisen. Im Sinne eines diensteintegrierenden Netzes kann die Zentralspeichereinrichtung 2 auch im Kommunikationsnetz 4 integriert und direkt vom Netzbetreiber, beispielsweise der nationalen Telekom, unterhalten werden.

Auf Konsumentenseite kommt ein Endgerät 6 zum Einsatz. Dieses muss zur digitalen Datenverarbeitung geeignet sein, d.h. zumindest ausgerüstet mit einem Prozessor, zugeordnetem Speicher sowie Datenein- und -ausgabeeinrichtungen, und ist vorzugsweise ein Personal Computer oder eine Workstation. Das Endgerät 6 lässt sich in an sich bekannter Weise über einen - nicht eingezeichneten - Kommunikationsanschluss, beispielsweise einen ISDN-Telefonapparat oder eine entsprechende Einbaukarte, mit dem Kommunikationsnetz 4 und über dieses mit der Zentralspeichereinrichtung 2 verbinden.

Die Zentralspeichereinrichtung 2 weist eine Datenbank 8 mit einem Angebot an digitalisierten Musikinformationen auf. Für den Zugriff auf die Datenbank 8 ist die Zentralspeichereinrichtung 2 mit einem Servermodul 10 und das Endgerät 6 mit einem Abrufmodul 12 ausgerüstet. Servermodul und Abrufmodul arbeiten via Kommunikationsnetz zusammen und bieten dem Konsumenten die für das Suchen, Auswählen bzw. Bestellen und Übermitteln der gewünschten Musikinformationen notwendigen Funktionen. Die Datenbank 8 ist bevorzugt objektorientiert aufgebaut und mit Zugriffsmechanismen versehen, die eine Suche nach möglichst vielfältigen Kriterien, insbesondere nach Titel, Textinhalten, Urheberangaben, Aufnahmedaten, Besetzung, Instrumente, Informationen zu vorhandenem Notenmaterial usw. erlaubt. Zudem ist es selbstverständlich auch möglich, die für eine Bestellung erforderlichen Angaben dem Konsumenten auf anderem Wege zur Verfügung zu stellen. Hierzu kommen unter anderem Kataloge, Werbeangebote in den diversen Medien oder auch Einblendungen in aktuelle Radio- und Fernsehsendungen in Frage.

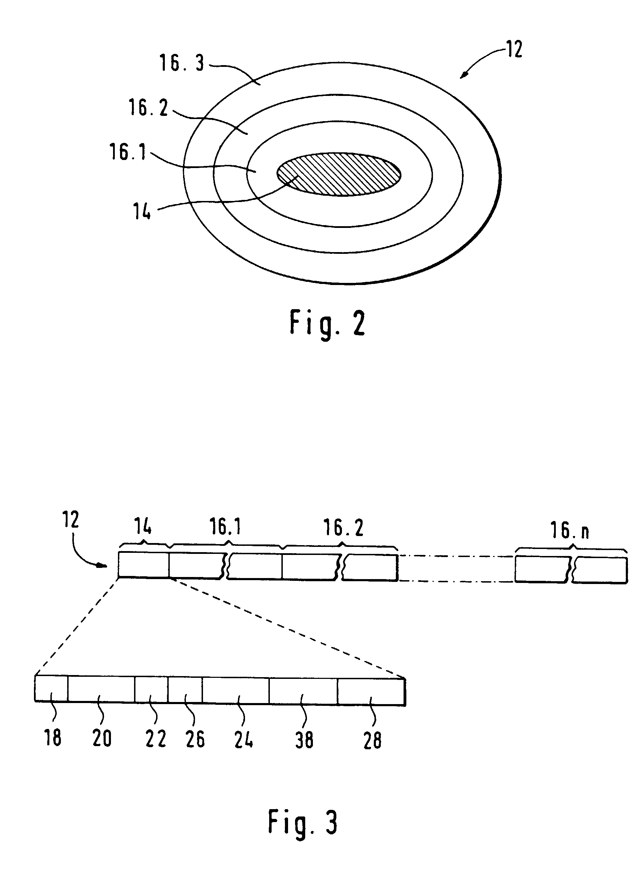

Erfindungsgemäss sind die vom Konsumenten ausgewählten Musikinformationen zur Übermittlung in einem digitalen Musikinformationenobjekt 12 organisiert, dessen Aufbau in den Figuren 2 und 3 veranschaulicht ist. Das Musikinformationenobjekt 12 umfasst einen Kern 14 und eine oder mehrere Zusatzschichten 16. In Figur 2 sind beispielshalber drei Zusatzschichten 16.1, 16.2 und 16.3 angenommen, in Figur 3 ist mit der Benennung 16.n der letzten Schicht angedeutet, dass die Anzahl der Zusatzschichten nach oben offen ist.

Der Kern 14 enthält die Basisinformationen zum gesamten Musikinformationenobjekt. Diese umfassen grundsätzlich einen Objekt-Identifikationscode 18 zur eindeutigen Identifizierung des Musikinformationenobjekts, Objekt-Strukturinformationen 20, welche den Aufbau des Musikinformationenobjekts, insbesondere Anzahl und Art der Zusatzschichten 16, beschreiben, einen Konsumentencode 22, welcher einem Konsumenten eindeutig zugeordnet ist und vom Anbieter vergeben wird oder zum Beispiel auch die Netz-Teilnehmernummer sein kann, sowie eine Verschlüsselungstabelle 24, auf die weiter unten näher eingegangen wird. Zusätzlich kann der Kern 14 noch weitere Basisinformationen enthalten, beispielsweise einen Lieferantencode 26 oder Verrechnungsinformationen 28, die über die dem Konsumenten berechneten Kosten der bezogenen Musikinformationen Auskunft geben.

Den Inhalt der Zusatzschichten 16 bilden die eigentlichen, vom Konsumenten gewünschten Musikinformationen. Die Zusammenstellung eines Musikinformationenobjekts nach Auswahl des Konsumenten erfolgt durch das Servermodul 10. Wählt der Konsument beispielsweise ein Musikstück und ein zugehöriges Notenarrangement, so erzeugt das Servermodul einen Kern 14 mit den entsprechenden Basisinformationen und gliedert diesem die benötigten Zusatzschichten 16 an. Dabei kann zum Beispiel jeweils eine Zusatzschicht für die akustisch wiedergebbaren Audioinformationen des Musikstücks, für die graphischen Informationen des Notenmaterials und für die zugehörigen Textinformationen (Name des Musikstücks, Angaben zu Mitwirkenden usw.) vorgesehen werden. In der gleichen Weise werden weitere Zusatzschichten angefügt (und die Basisinformationen im Kern entsprechend ergänzt), wenn der Konsument mit derselben Bestellung noch andere Musikinformationen zu erhalten wünscht.

Die Musikinformationen liegen zweckmässig in jeweils dem spezifischen Datentyp angepasstem Format vor, wobei im Rahmen der Erfindung die Wahl eines beliebigen Formats bzw. einer beliebigen Beschreibungssprache möglich ist. So können etwa die Audiodaten direkt über einen Analog-Digital-Konverter digitalisiert oder auch mittels der bei digitalen Musikgeräten schon seit längerem gebräuchlichen GMIDI-Architektur (General Musical Digital Instrument Interface) beschrieben sein. Ebenso ist beispielsweise für graphische Informationen eine Beschreibungssprache wie Postscript und für Videodaten eines der bekannten Videoformate möglich. Zusätzlich zu den eigentlichen Musikinformationen kann eine Zusatzschicht zugehörige Datenbeschreibungsinformationen oder auch Programmteile enthalten, welche zur Wiedergabeaufbereitung benützt werden.

Bei einer bevorzugten Ausführung des Musikinformationenobjekts sind für die verschiedenen Datentypen eigene Schichtklassen mit einem standardisierten, auf den Datentyp angepassten Aufbau vorgesehen. In dieser Ausführung sind Audioinformationen in einer Zusatzschicht der Audioschichtklasse enthalten, graphisch aufzubereitendes Notenmaterial in einer Zusatzschicht der Notenschichtklasse, Textinformationen in einer Zusatzschicht der Textschichtklasse und Videoinformationen in einer Zusatzschicht der Videoschichtklasse.

Zur Übermittlung wird das Musikinformationenobjekt 12 verschlüsselt. Hierzu weist die Zentralspeichereinrichtung 2 ein Verschlüsselungsmodul 30 auf. Die Verschlüsselung basiert auf der Verschlüsselungstabelle 24, die - wie weiter oben erwähnt - ebenfalls im Kern 14 enthalten ist, und erfolgt beispielsweise mit einer Pixelmatrix-Kryptographiemethode.

Um den Inhalt des Musikinformationenobjekts wiedergeben zu können, muss das Endgerät 6 ein Entschlüsselungsmodul 32 aufweisen, welches wiederum mit der im Kern 14 des Musikinformationenobjekts enthaltenen Verschlüsselungstabelle 24 arbeitet, sowie ein Interpretationsmodul 34, welches die Zusatzschichten 16 aufgrund der im Kern 14 enthaltenen Basisinformationen interpretiert und die Musikinformationen in eine zur Wiedergabe geeignete Form aufbereitet.

Als zusätzliche Sicherheitsvorkehrung muss das Endgerät 6 ferner mit einer Zulassungseinrichtung 36, beispielsweise in Form eines Dongles, einer Chipkarte, einer PCMCIA-Karte oder einer CD-ROM, ausgerüstet sein, welche vom Anbieter der Musikinformationen zur Verfügung gestellt wird. Auf der Zulassungseinrichtung sind Identifikationsinformationen zur Identifizierung des Konsumenten oder des Endgeräts, wie etwa der Konsumentencode, in chiffrierter Form so gespeichert, dass sie vom Entschlüsselungsmodul 32 oder vom Interpretationsmodul 34 zwecks Überprüfung der Zulassung abgefragt werden können.

Auf diese Weise kann das Musikinformationenobjekt 12 nur wiedergegeben werden, wenn sowohl das Entschlüsselungsmodul 32 und das Interpretationsmodul 34 als auch die Zulassungseinrichtung 36 sowie die im Musikinformationenobjekt enthaltene Verschlüsselungstabelle 24 ordnungsgemäss vorhanden sind.

Vorzugsweise sind diese Sicherheitsmechanismen noch dadurch verstärkt, dass der Kern 14 des Musikinformationenobjekts zusätzlich ein Zulassungsprüfungsprogrammteil 38 enthält, welches vom Entschlüsselungsmodul 32 oder vom Interpretationsmodul 34 zur Zulassungsüberprüfung aufgerufen werden kann. Da das Zulassungsprüfungsprogrammteil 38 jeweils mit dem Musikinformationenobjekt übermittelt wird, hat der Anbieter die Möglichkeit, den Ablauf der Zulassungsprüfung von Zeit zu Zeit zu variieren und damit die Sicherheit gegen eine Umgehung des Kopierschutzes weiter zu verstärken.

Für eine schnelle und kostengünstige Übermittlung des Musikinformationenobjekts ist es vorteilhaft, dieses mit einem Datenkomprimierungsverfahren zu komprimieren. Zu diesem Zweck kann die Zentralspeichereinrichtung 2 ein Komprimierungsmodul 40 und das Endgerät 6 ein Dekomprimierungsmodul 42 aufweisen.

Sind die Musikinformationen durch das Interpretationsmodul 34 im Endgerät 6 zur Wiedergabe aufbereitet, lassen sie sich in bekannter Weise auf akustischen oder visuellen Wiedergabeeinrichtungen ausgeben. Diese können im Endgerät vorhanden oder, wie in Figur 1 mit den Bezugsziffern 44, 46 und 48 bezeichnet, mit diesem verbunden sein. Geeignete Wiedergabeeinrichtungen sind beispielsweise eine Soundkarte, an die Lautsprecher oder eine Musikanlage angeschlossen sind, ein Monitor oder ein graphikfähiger Drucker. Der Konsument ist damit in der Lage, die übermittelten Musikstücke anzuhören, Videofilme auf einem Monitor anzusehen und Textinformationen, Notenmaterial und Bilder auf einem Monitor oder einem Drucker auszugeben. Gegebenenfalls lassen sich die Musikinformationen, insbesondere Musikdaten im GMIDI-Format oder Bilddaten, durch den Konsumenten mittels entsprechender bekannter Programme auch nach Bedarf weiterbearbeiten.

In aller Regel wird das Endgerät 6 zudem mit einer Datenaufzeichnungseinrichtung 50 ausgerüstet sein, mit der die einmal übermittelten Musikinformationenobjekte auf einem Datenträger, beispielsweise einer Diskette, einer magnetischen, optischen oder magnetooptischen Speicherplatte oder einem Halbleiterspeicher, lokal gespeichert werden können.

Als weitere Komponente kann das Endgerät 6 ein Verwaltungsmodul 52 aufweisen, welches zusätzliche Funktionen zur Organisation und Wiedergabe der lokal gespeicherten Musikinformationenobjekte bereitstellt. In einer einfachen Version, die in erster Linie für Privatnutzer vorgesehen ist, umfassen die Funktionen beispielsweise das Suchen nach bestimmten Musikinformationen, das automatische Abspielen einer beliebigen Abfolge von Musikstücken und das Zusammenstellen von Musikprogrammen für spezielle Anlässe, inklusive Pausen und eingespielten individuellen Aufnahmen, zum Beispiel Durchsagen oder Ansprachen. In erweiterten Versionen, insbesondere für Diskotheken oder Radio- und Fernsehstudios, sind darüberhinausgehende Funktionen denkbar, etwa das Anzeigen von Informationen über das zur Zeit laufende Musikstück am Monitor, die automatische Programmgestaltung unter Verwendung der Angaben zu den Musikstücken in den Musikinformationenobjekten, die Adressierung von anderweitigen Musikstücken, welche in Archiven vorhanden sind oder die automatische Einspielung von Werbeblöcken.

Auch auf Anbieterseite ist selbstverständlich der Einbau zusätzlicher Funktionen möglich. So kann beispielsweise in der Zentralspeichereinrichtung 2 ein Verrechnungsmodul 54 vorgesehen sein, das aufgrund von Angaben über die übermittelten Musikinformationenobjekte dem Konsumenten die Gebühren in Rechnung stellt und gegebenenfalls anfallende Abgaben zu Handen der Urheber verrechnet.

## Patentansprüche

1. Vorrichtung zum Vertrieb von Musikinformationen, welche anbieterseitig eine an ein Kommunikationsnetz (4) angeschlossene oder in dieses integrierte Zentralspeichereinrichtung (2), die eine Datenbank (8) digitalisierter Musikinformationen aufweist, und konsumentenseitig ein Endgerät (6), welches über das Kommunikationsnetz (4) mit der Zentralspeichereinrichtung (2) verbindbar ist, umfasst, wobei die Zentralspeichereinrichtung (2) mit einem Servermodul (10) und das Endgerät (6) mit einem Abrufmodul (12) ausgerüstet ist und die genannten Module (10,12) über das Kommunikationsnetz (4) zur Bestellung und Übermittlung von selektiv ausgewählten Musikinformationen zusammenzuarbeiten vermögen, dadurch *gekennzeichnet*,
dass die selektiv ausgewählten Musikinformationen zur Übermittlung in einem digitalen Musikinformationenobjekt (12) mit einem festgelegten Format organisiert sind, welches einen Kern (14) und eine Anzahl Zusatzschichten (16;16.1,16.2,16.3,16.n) umfasst, wobei der Kern (14) wenigstens einen Objekt-Identifikationscode (18), Objekt-Strukturinformationen (20), einen Konsumentencode (22) und eine Verschlüsselungstabelle (24) enthält und die eine oder mehreren Zusatzschichten (16;16.1,16.2,16.3,16.n) die eigentlichen Musikinformationen enthalten,
dass die Zentralspeichereinrichtung (2) ein Verschlüsselungsmodul (30) zur Verschlüsselung des Musikinformationenobjekts (12) vor der Übermittlung unter Verwendung der in letzerem enthaltenen Verschlüsselungstabelle (24) aufweist und
dass das Endgerät (6) ein Entschlüsselungsmodul (32) zur Entschlüsselung des Musikinformationenobjekts (12) vor seiner Wiedergabe unter Verwendung der in letzerem enthaltenen Verschlüsselungstabelle (24), ein Interpretationsmodul (34) zur Interpretation und Wiedergabeaufbereitung des Musikinformationenobjekts (12) sowie eine Zulassungseinrichtung (36) mit Identifikationsinformationen zur Identifizierung des Endgeräts und/oder des Konsumenten, welche durch das Interpretationsmodul (34) und/oder das Entschlüsselungsmodul (32) zur Zulassungsüberprüfung abfragbar sind, aufweist.

2. Vorrichtung nach Patentanspruch 1, dadurch *gekennzeichnet,* dass der Kern (14) des Musikinformationenobjekts (12) ein Zulassungsprüfungsprogrammteil (38) enthält, welches durch das Interpretationsmodul (34) und/oder das Entschlüsselungsmodul (32) zur Zulassungsüberprüfung aufrufbar ist.

3. Vorrichtung nach einem der Patentansprüche 1 oder 2, dadurch *gekennzeichnet,* dass die Zentralspeichereinrichtung (2) ein Komprimierungsmodul (40) zur Komprimierung des Musikinformationenobjekts (12) vor der Übermittlung und das Endgerät (6) ein Dekomprimierungsmodul (42) zur Dekomprimierung des Musikinformationenobjekts (12) vor seiner Wiedergabe aufweist.

4. Vorrichtung nach einem der Patentansprüche 1 bis 3, dadurch *gekennzeichnet,* dass das Endgerät (6) mit einer Datenaufzeichnungseinrichtung (50) zur lokalen Speicherung der übermittelten Musikinformationenobjekte auf einem Datenträger versehen ist.

5. Vorrichtung nach Patentanspruch 4, dadurch *gekennzeichnet*, dass der Datenträger eine Diskette, eine magnetische, optische oder magnetooptische Speicherplatte oder ein Halbleiterspeicher ist.

6. Vorrichtung nach einem der Patentansprüche 1 bis 5, dadurch *gekennzeichnet*, dass das Endgerät (6) ein Personal Computer oder eine Workstation ist.

7. Vorrichtung nach einem der Patentansprüche 1 bis 6, dadurch *gekennzeichnet*, dass wenigstens eine Wiedergabeeinrichtung (44,46,48) zur akustischen bzw. visuellen Wiedergabe der Musikinformationen im Endgerät (6) vorhanden oder mit diesem verbunden ist.

8. Vorrichtung nach einem der Patentansprüche 1 bis 7, dadurch *gekennzeichnet*, dass nebst den Musikinformationen in der jeweiligen Zusatzschicht (16;16.1, 16.2,16.3,16.n) des Musikinformationenobjekts (12) zugehörige Datenbeschreibungsinformationen und/oder Programmteile enthalten sind.

9. Vorrichtung nach einem der Patentansprüche 1 bis 8, dadurch *gekennzeichnet*, dass jede Zusatzschicht (16;16.1,16.2,16.3,16.n) jeweils einer der folgenden Schichtklassen zugehört:
a) Audioschichtklasse, vorgesehen für Audioinformationen;
b) Notenschichtklasse, vorgesehen für graphisch aufzubereitende Informationen;
c) Textschichtklasse, vorgesehen für Textinformationen;
d) Videoschichtklasse, vorgesehen für Videoinformationen.

10. Vorrichtung nach Patentanspruch 9, dadurch *gekennzeichnet,* dass die in der jeweiligen Zusatzschicht (16;16.1,16.2,16.3,16.n) enthaltenen Musikinformationen in einem der jeweiligen Schichtklasse angepassten Format kodiert sind.

11. Vorrichtung nach einem der Patentansprüche 1 bis 10, dadurch *gekennzeichnet,* dass das Endgerät (6) ein Verwaltungsmodul (52) für Musikinformationenobjekte (12) aufweist.

12. Vorrichtung nach einem der Patentansprüche 1 bis 11, dadurch *gekennzeichnet,* dass in der Zentralspeichereinrichtung (2) ein Verrechnungsmodul (54) zur Verrechnung der Kosten der vom Konsumenten bezogenen Musikinformationen vorgesehen ist.

13. Vorrichtung nach einem der Patentansprüche 1 bis 12, dadurch *gekennzeichnet,* dass der Kern (14) des Musikinformationenobjekts (12) Verrechnungsinformationen (28) über die Kosten der Musikinformationen enthält.

14. Verfahren zum Transport bzw. Vertrieb von Musikinformationen in digital kodierter Form, *dadurch gekennzeichnet,* dass
a) ein Musikinformationenobjekt (12) in einen Kern (14) und eine Anzahl von Zusatzschichten (16;16.1,16.2,16.3,16.n) strukturiert wird, wobei
b) dem Kern (14) zugeordnet werden:
- wenigstens ein Objekt-Identifikationscode (18) für Informationen zur Authentifizierung eines angeschlossenen Konsumenten zwecks Prüfung der Zugriffsberechtigung und Installation auf einem Endgerät (6) bei Erkennen der Zugriffsberechtigung;
- Objekt-Strukturinformationen (20) als Beschreibung der Art und des Umfangs des im Musikinformationenobjekt (12) gespeicherten Inhalts;
- ein Konsumentencode (22), welcher vom Anbieter vergeben wird und einem Konsumenten eindeutig zugeordnet ist, wobei die effektive Nutzung durch den Konsumenten in die Kostenabrechnung einfliesst; und
- eine Verschlüsselungstabelle (24) zum Schutz des Musikinformationenobjekts (12) durch Verschlüsseln vor der Übermittlung an den Konsumenten;
c) in die eine oder mehrere Zusatzschichten (16;16.1,16.2,16.3,16.n) die effektiven Musikinformationen, in Form von Musikdaten und einem digitalen Soundinterpretationsprogramm zur hardwareunabhängigen Interpretation des Sounds, eingegeben werden.

15. Verfahren nach Anspruch 14, *dadurch gekennzeichnet,* dass
a) das Musikinformationenobjekt (12) vor der Übermittlung auf das Endgerät (6) des angeschlossenen Konsumenten mit einem Datenkomprimierungsverfahren komprimiert wird; und
b) das Musikinformationenobjekt (12) vor seiner Wiedergabe mittels eines im Kern (14) gespeicherten Datendekomprimierungsverfahrens und eines im Endgerät (6) befindenden Dekomprimierungsmoduls (42) dekomprimiert wird.

16. Verfahren nach Anspruch 14 oder 15, *dadurch gekennzeichnet,* dass jede Zusatzschicht (16;16.1,16.2,16.3,16.n) jeweils einer der folgenden Schichtklassen zugeordnet wird:
a) Audioschichtklasse, vorgesehen für Audioinformationen;
b) Notenschichtklasse, vorgesehen für graphisch aufzubereitende Informationen;
c) Textschichtklasse, vorgesehen für Textinformationen; und
d) Videoschichtklasse, vorgesehen für Videoinformationen.

17. Verfahren nach Anspruch 16, dadurch gekennzeichnet, dass die in der jeweiligen Zusatzschicht (16;16.1,16.2,16.3,16.n) enthaltenen Musikinformationen in einem der jeweiligen Schichtklasse angepassten Format kodiert werden.

## Claims

1. Device for the distribution of music information which comprises, on the supplier side, a central memory device (2) which is connected to a communications network (4) or is integrated therein and has a databank (8) of digitised music information and, on the consumer side, a terminal (6) which can be connected to the central memory device (2) via the communications network (4), the central memory device (2) being equipped with a server module (10) and the terminal (6) being equipped with a retrieval module (12) and the said modules (10,12) having the capability to interact via the communications network (4) in order to order and transmit selectively chosen music information, *characterised in that,*
the selectively chosen music information is organised with a defined format for transmission in a digital music information object (12), which format comprises a core (14) and a number of additional layers (16;16.1,16.2,16.3,16.n), the core (14) including at least one object identification code (18), object structure information (20), a consumer code (22) and an encryption table (24) and the one or more additional layers (16;16.1,16.2,16.3,16.n) including the actual music information,
wherein the central memory device (2) has an encryption module (30) for encryption of the music information object (12) before transmission using the encryption table (24) included in the latter, and
wherein the terminal (6) has a decryption module (32) for decryption of the music information object (12) before its reproduction using the encryption table (24) included in the latter, an interpretation module (34) for interpretation and reproduction conditioning of the music information object (12) as well as an authorisation device (36) with identification information for identification of the terminal and/or of the consumer which can be called up by the interpretation module (34) and/or by the decryption module (32) for authorisation checking.

2. Device as claimed in patent claim 1, *characterised in that,* the core (14) of the music information object (12) includes an authorisation checking program part (38) which can be called up by the interpretation module (34) and/or by the decryption module (32) for authorisation checking.

3. Device as claimed in one of patent claims 1 or 2, *characterised in that,* the central memory device (2) has a compression module (40) for compression of the music information object (12) before transmission, and the terminal (6) has a decompression module (42) for decompression of the music information object (12) before its reproduction.

4. Device as claimed in one of patent claims 1 to 3, *characterised* in *that,* the terminal (6) is provided with a data recording device (50) for local storage of the transmitted music information objects on a data medium.

5. Device as claimed in patent claim 4, *characterised in that*, the data medium is a diskette, a magnetic, optical or magnetooptic storage disk or a semiconductor memory.

6. Device as claimed in one of patent claims 1 to 5, *characterised in that,* the terminal (6) is a personal computer or a workstation.

7. Device as claimed in one of patent claims 1 to 6, *characterised in that,* at least one reproduction device (44,46,48) is provided for audible or visual reproduction of the music information in the terminal (6), or is connected to it.

8. Device as claimed in one of patent claims 1 to 7, *characterised in that,* the respective additional layer (16;16.1,16.2,16.3,16.n) of the music information object (12) includes associated data description information and/or program parts in addition to the music information.

9. Device as claimed in one of patent claims 1 to 8, *characterised in that,* each additional layer (16;16.1,16.2,16.3, 16.n) belongs in each case to one of the following layer classes:
a) audio layer class, provided for audio information;
b) score layer class, provided for information which is to be conditioned graphically;
c) text layer class, provided for text information;
d) video layer class, provided for video information.

10. Device as claimed in patent claim 9, *characterised in that,* the music information which is included in the respective additional layer (16;16.1,16.2,16.3,16.n) is coded in a format which is matched to the respective layer class.

11. Device as claimed in one of patent claims 1 to 10, *characterised in that,* the terminal (6) has an administration module (52) for music information objects (12).

12. Device as claimed in one of patent claims 1 to 11, *characterised in that,* a billing module (54) for billing the costs of the music information supplied to the consumer is provided in the central memory device (2).

13. Device as claimed in one of patent claims 1 to 12, *characterised in that,* the core (14) of the music information object (12) includes billing information (28) on the costs of the music information.

14. Method for transportation and distribution of music information in digitally coded form, *characterised in that,*
a) a music information object (12) is structured into a core (14) and a number of additional layers (16;16.1, 16.2,16.3,16.n), wherein
b) to the core (14) are assigned:
- at least one object identification code (18) for information to the authentication of a connected consumer for the purpose of checking the authorisation and installation of a terminal (6) if the authorisation is conferred;
- object structure information (20) as a specification of the type and the volume of the contents memorised within the music information object (12);
- a consumer code (22) which is assigned by the supplier and assigned unambiguously to one consumer, the real use by the consumer determined the billing of the costs; and
- an encryption table (24) for the protection of the music information object (12) by encryption before the transmission to the consumer;
c) the real music information are fed into the one or several additional layers (16;16.1,16.2,16.3,16.n) in form of music data and a digital sound interpretation program for the interpretation of the sound independent of the hardware.

15. Method as claimed in patent claim 14, *characterised in that,*
a) the music information object (12) is compressed using a data compression method before the transmission to the terminal (6) of the consumer connected; and
b) the music information object (12) is before its reproduction decompressed by means of a data decompression method memorised within the core (14) and a decompression module (42) provided within the terminal (6).

16. Method as claimed in patent claim 14 or 15, *characterised in that,*
each additional layer (16;16.1,16.2,16.3,16.n) is assigned in each case to one of the following layer classes:
a) audio layer class, provided for audio information;
b) score layer class, provided for information which is to be conditioned graphically;
c) text layer class, provided for text information; and
d) video layer class, provided for video information.

17. Method as claimed in patent claim 16, *characterised in that*, the music information which is included in the respective additional layer (16;16.1,16.2,16.3,16.n) is coded in a format which is matched to the respective layer class.

## Revendications

1. Dispositif de distribution d'informations musicales, lequel comprend, du côté prestataire, un dispositif de mémoire centrale (2) connecté à un réseau de communication (4) ou intégré dans celui-ci, qui comporte une base de données (8) pour informations musicales numérisées, et, du côté consommateur, un terminal (6), qui peut être relié au dispositif de mémoire centrale (2) par l'intermédiaire du réseau de communication (4), le dispositif de mémoire centrale (2) étant équipé d'un module de serveur (10) et le terminal (6) étant équipé d'un module d'appel (12) et les modules (10, 12) cités pouvant être couplés par l'intermédiaire du réseau de communication (4) pour assurer la commande et le transfert des informations musicales choisies de façon sélective, caractérisé
en ce que, pour assurer le transfert, les informations musicales choisies de façon sélective sont organisées en un paquet d'informations musicales numérique (12) ayant un format défini, qui comprend un noyau (14) et une série de strates supplémentaires (16; 16.1, 16.2, 16.3, 16.n), le noyau (14) contenant au moins un code d'identification (18) du paquet, des informations de structure (20) du paquet, un code du consommateur (22) et une table de cryptage (24), et la ou les strates supplémentaires (16 ; 16.1, 16.2, 16.3, 16.n) contenant les informations musicales proprement dites,
en ce que le dispositif de mémoire centrale (2) comporte un module de cryptage (30) destiné à crypter le paquet d'informations musicales (12) avant son transfert, en utilisant la table de cryptage (24) contenue dans ce dernier, et
en ce que le terminal (6) comporte un module de décryptage (32) destiné à décrypter le paquet d'informations musicales (12) avant sa restitution, en utilisant la table de cryptage (24) contenue dans ce dernier, un module d'interprétation (34) destiné à interpréter et à traiter la restitution du paquet d'informations musicales (12), ainsi qu'un dispositif d'agrément (36) ayant des informations d'identification pour identifier le terminal et/ou le consommateur, qui peuvent être interrogés par le module d'interprétation (34) et/ou le module de décryptage (32) pour effectuer un contrôle d'agrément.

2. Dispositif selon la revendication 1, caractérisé en ce que le noyau (14) du paquet d'informations musicales (12) contient une partie de programme de test d'agrément (38), qui peut être chargé par le module d'interprétation (34) et/ou le module de décryptage (32) pour effectuer le contrôle d'agrément.

3. Dispositif selon la revendication 1 ou 2, caractérisé en ce que le dispositif de mémoire centrale (2) comprend un module de compression (40) destiné à comprimer le paquet d'informations musicales (12) avant le transfert et en ce que le terminal (6) comprend un module de décompression (42) destiné à décomprimer le paquet d'informations musicales (12) avant sa restitution.

4. Dispositif selon l'une quelconque des revendications 1 à 3, caractérisé en ce que le terminal (6) est pourvu d'un dispositif d'enregistrement des données (50) destiné à mémoriser localement sur un support de données les paquets d'informations musicales transférés.

5. Dispositif selon la revendication 4, caractérisé en ce que le support de données est une disquette, un disque à mémoire magnétique, optique ou magnéto-optique ou une mémoire à semi-conducteurs.

6. Dispositif selon l'une quelconque des revendications 1 à 5, caractérisé en ce que le terminal (6) est un ordinateur individuel ou une station de travail.

7. Dispositif selon l'une quelconque des revendications 1 à 6, caractérisé en ce qu'au moins un dispositif de restitution (44, 46, 48) destiné à la restitution acoustique ou visuelle des informations musicales est installé dans le terminal (6) ou connecté à celui-ci.

8. Dispositif selon l'une quelconque des revendications 1 à 7, caractérisé en ce qu'une strate supplémentaire (16 ; 16.1, 16.2, 16.3, 16.n) respective du paquet d'informations musicales (12) contient, outre les informations musicales, des informations de description de données et/ou des parties de programme correspondantes.

9. Dispositif selon l'une quelconque des revendications 1 à 8, caractérisé en ce que chaque strate supplémentaire (16 ; 16.1, 16.2, 16.3, 16.n) correspond respectivement à une des catégories de strate suivantes :
a) catégorie des strates audio, prévue pour les informations relatives au son ;
b) catégorie des strates de notes musicales, prévue pour des informations à traiter graphiquement ;
c) catégorie des strates de texte, prévue pour des informations relatives au texte ;
d) catégorie des strates vidéo, prévue pour les informations vidéo.

10. Dispositif selon la revendication 9, caractérisé en ce que les informations musicales contenues dans la strate supplémentaire respective (16; 16.1, 16.2, 16.3, 16.n) sont codées dans un format adapté à la catégorie respective de strate.

11. Dispositif selon l'une quelconque des revendications 1 à 10, caractérisé en ce que le terminal (6) comprend un module de gestion (52) pour les paquets d'informations musicales (12).

12. Dispositif selon l'une quelconque des revendications 1 à 11, caractérisé en ce qu'il est prévu, dans le dispositif de mémoire centrale (2), un module de comptabilité (54) destiné à comptabiliser les coûts des informations musicales reçues spécifiquement par le consommateur.

13. Dispositif selon l'une quelconque des revendications 1 à 12, caractérisé en ce que le noyau (14) du paquet d'informations musicales (12) contient des informations de comptabilité (28) relatives aux coûts des informations musicales.

14. Procédé de transmission ou de distribution d'informations musicales sous forme codée numériquement, caractérisé en ce que
a) un paquet d'informations musicales (12) est structuré en un noyau (14) et une suite de strates supplémentaires (16 ; 16.1, 16.2, 16.3, 16.n),
b) le noyau (14) étant ordonné avec :
- au moins un code d'identification (18) du paquet pour des informations destinées à authentifier un consommateur connecté, afin de contrôler le droit d'accès et de l'installer sur un terminal (6) lors de la reconnaissance du droit d'accès ;
- des informations de structure (20) du paquet comme description du type et du volume du contenu stocké dans le paquet d'informations musicales (12) ;
- un code du consommateur (22), qui est délivré par le prestataire et attribué de manière univoque à un consommateur, l'usage effectif du code par le consommateur glissant dans le décompte des coûts ; et
- une table de cryptage (24) destinée à protéger le paquet d'informations musicales (12) par cryptage avant le transfert au consommateur ;
c) les informations musicales effectives sont introduites dans la ou les strates supplémentaires (16; 16.1, 16.2, 16.3, 16.n), sous forme de données musicales et d'un programme d'interprétation de son numérique destiné à interpréter les sons indépendamment du matériel.

15. Procédé selon la revendication 14, caractérisé en ce que
a) le paquet d'informations musicales (12) est comprimé par un procédé de compression de données avant le transfert vers le terminal (6) du consommateur connecté ; et
b) le paquet d'informations musicales (12) est décomprimé avant sa restitution à l'aide d'un procédé de décompression des données stocké dans le noyau (14) et à l'aide d'un module de décompression (42) situé dans le terminal (6).

16. Procédé selon la revendication 14 ou 15, caractérisé en ce que chaque strate supplémentaire (16; 16.1, 16.2, 16.3, 16.n) est affectée respectivement à l'une des catégories de strate suivante :
a) catégorie des strates audio, prévue pour les informations relatives au son ;
b) catégorie des strates de notes musicales, prévue pour des informations à traiter graphiquement ;
c) catégorie des strates de texte, prévue pour des informations relatives au texte ;
d) catégorie des strates vidéo, prévue pour les informations vidéo.

17. Procédé selon la revendication 16, caractérisé en ce que les informations musicales contenues dans la strate supplémentaire respective (16; 16.1, 16.2, 16.3, 16.n) sont codées dans un format adapté à la catégorie respective de strate.
